# EUROPÄISCHE PATENTSCHRIFT

(11) **EP 1 683 839 B1**
(45) Veröffentlichungstag und Bekanntmachung des Hinweises auf die Patenterteilung: **22.10.2014**
(21) Anmeldenummer: 05028178.1
(22) Anmeldetag: 22.12.2005
(51) Int. Cl.: C09C 1/00

(54) **Effektpigmente mit starkem Farbflop**
Effect pigments with a strong colour flop
Pigment à effet avec une forte variation de ton

(30) Priorität: 17.01.2005 DE 102005001997
(43) Veröffentlichungstag der Anmeldung: 26.07.2006
(73) Patentinhaber: Merck Patent GmbH, 64293 Darmstadt (DE)
(72) Erfinder: Pfaff, Gerhard Dr., 64839 Münster (DE); Foerderer, Cornelia, 64646 Heppenheim (DE); Dietz, Johann Dr., 63218 Dietzenbach (DE); Warthe, Doreen, 64347 Griesheim (DE)

(56) Entgegenhaltungen:
- EP-A1- 1 281 732
- EP-A2- 0 832 943
- EP-A2- 1 469 041
- WO-A1-93/08237
- US-A- 4 038 099

## Beschreibung

Die vorliegende Erfindung betrifft Effektpigmente mit Farbflop umfassend mit Metalloxiden beschichtete SiO₂-Plättchen mit einheitlicher Schichtdicke, wobei der Farbflop durch alle vier Quadranten des a,b-Farbkoordinatensystems (L,a,b-System nach CIELAB) verläuft. Ebenfalls Gegenstand der vorliegenden Erfindung sind Verfahren zur Herstellung dieser Pigmente, wobei SiO₂-Plättchen mit einheitlicher Schichtdicke mit Metalloxiden beschichtet werden sowie die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Der Einsatz von Glanz- oder Effektpigmenten ist weit verbreitet. Bei Automobillacken, dekorativen Beschichtungen aller Art sowie bei der Einfärbung von Kunststoffen, bei Anstrich- und Druckfarben, insbesondere Farben für den Sicherheitsdruck, sowie bei Anwendungen in der dekorativen Kosmetik sind derartige Pigmente unverzichtbar geworden. In der sie umgebenden Matrix richten sich diese Pigmente idealerweise parallel zur Oberfläche der Beschichtung aus und entfalten durch ein kompliziertes Zusammenspiel von Interferenz, Reflexion und Absorption des auffallenden Lichtes ihre optische Wirkung. Dabei stehen für die verschiedenen Anwendungsfälle eine brillante Farbgebung, Wechsel zwischen verschiedenen Farben in Abhängigkeit vom Betrachtungswinkel, so genannte Farbflops, oder wechselnde Helligkeitseindrücke im Mittelpunkt des Interesses.

Die Herstellung solcher Pigmente erfolgt in der Regel durch Beschichtung von plättchenförmigen metallischen oder nichtmetallischen Substraten mit Metalloxid- oder Metallschichten. Die meisten dieser Pigmente basieren auf plättchenförmigen Substraten aus Metallen oder natürlichen Schichtsilikaten, wie Glimmer, Talk oder Glas. Die Beschichtung von plättchenförmigen Substraten wie z.B.Glimmer mit TiO₂ ist aus US 4,038,099 und EP 0 832 943 A2 bekannt, wobei die Dicke der Substrate 0,03 - 3,0 µm bzw. 0,1 - 1 µm betragen kann.

Dabei weisen insbesondere die Schichtsilikate den Nachteil auf, dass die Dicke des Substrates in einem weiten Bereich variiert und nicht gezielt einstellbar ist, was dazu führt, dass auch bei transparenten Substraten Lichttransmission und -reflexion am Substrat weitgehend unkontrollierbar ablaufen und daher nicht gezielt nutzbar sind.

Silberpigmente auf der Basis von SiO₂-Plättchen mit einer Dicke von 0,02 - 10 µm sind aus EP 1 469 041 A2 bekannt.
Aus WO 93/08237 sind Effektpigmente auf der Basis von SiO₂-Plättchen bekannt, die sich mittels einer Bandtechnologie mit einer geringeren Schichtdickenvarianz herstellen lassen. Die Dicke der dort beschriebenen SiO₂-Plättchen beträgt üblicherweise zwischen 200 nm und 2 µm.
EP 1 281 732 A1 offenbart mehrschichtige Effektpigmente, die eine starke Winkelabhängigkeit der Interferenzfarben besitzen und 100 bis 600 nm dicke SiO₂-Plättchen umfassen, wobei ein Effektpigment mit 500 nm dicken SiO₂-Plättchen einen Farbflop zeigt, der durch alle vier Quadranten des a,b-Farbkoordinatensystems (L,a,b-System nach CIELAB) verläuft.

Mit den bislang bekannten Pigmente lassen sich nicht alle gewünschten Effekte realisieren, so dass ein stetiger Bedarf an neuen Pigmenten besteht, die sich universell in verschiedensten Anwendungen einsetzen lassen, und neuartige und interessante Farbeffekte zeigen. Insbesondere besteht großes Interesse an Effektpigmenten, die einen starken Farbflop zeigen. Dieser Wechsel zwischen verschiedenen Farben in Abhängigkeit vom Betrachtungswinkel gewinnt bei der dekorativen Gestaltung alltäglicher Gegenstände zunehmend an Bedeutung, so dass ein steter Bedarf an Pigmenten mit neuartigen Farbwechseln besteht. Die bislang bekannten Farbfloppigmente zeigen nur Farbwechseln in begrenzten Farbbereichen. Effektpigmente mit einem die Farben umspannenden Farbwechsel sind nicht bekannt, so dass ein großer Bedarf an Effektpigmenten, die diese Effekte zeigen, besteht.

Es bestand daher die Aufgabe, Effektpigmente mit verbesserten optischen Eigenschaften, insbesondere mit einem starken Farbflop zu finden, die sich universell in verschiedensten Anwendungen einsetzen lassen.

Die oben genannte Aufgabe wird durch Pigmente gemäß der vorliegenden Erfindung gelöst. Gegenstand der vorliegenden Erfindung sind demnach Effektpigmente mit Farbflop umfassend mit Metalloxiden beschichtete SiO₂₋Plättchen mit einheitlicher Schichtdicke, wobei die Dicke der SiO₂-Plättchen 520 bis 560 nm beträgt, die Dicke der Metalloxidschichten 15 bis 40 nm beträgt und der Farbflop durch alle vier Quadranten des a,b-Farbkoordinatensystems (L,a,b-System nach CIELAB) verläuft.

Die Bewertung der Farbeigenschaften der erfindungsgemäßen Pigmente erfolgt in der vorliegenden Erfindung nach dem a,b-Farbkoordinatensystem, das auch als L,a,b-System nach CIELAB bezeichnet wird. Das CIEL*a*b*-Farbsystem ist das bekannteste und weitverbreitete Farbsystem. Im CIELAB-Modell liegen alle Farbtöne gleicher Helligkeit auf einer kreisförmigen, flachen Ebene, auf der sich senkrecht zueinander die a- und b-Achsen befinden. Die Ebene wird damit durch die a- und b-Achsen in Quadranten aufgeteilt. Positive a-Werte sind *rötlich,* negative a-Werte *grünlich*, positive b-Werte *gelblich* und negative b-Werte *bläulich.* Wird eine Farbe in CIELAB definiert, so beschreibt **a** den *Rot-*/*Grünwert* und **b** den *Gelb-*/*Blauwert*. Am Umfang der Farbscheibe liegen die reinen Farbtöne mit hoher Sättigung. Nach innen nimmt die Sättigung bis zur Achse ab, dort ist sie Null (unbunt, grau). Komplementärfarben liegen einander gegenüber.

Ebenfalls Gegenstand der vorliegenden Erfindung sind Verfahren zur Herstellung dieser Pigmente, wobei SiO₂-Plättchen mit einheitlicher Schichtdicke mit Metalloxiden beschichtet werden.

Es wurde überraschenderweise gefunden, dass Effektpigmente gemäß der vorliegenden Erfindung bislang unerreichte Farbwechsel zeigen, die sich über alle vier Quadranten des a, b-Farbkoordinatensystems erstrecken. Die Bereitstellung dieser neuartigen Effektpigmente erlaubt dem Gestalter die Einbringung besonderer Farbeffekte beim Design in allen dem Fachmann bekannten Anwendungsgebieten. Je nach gewählten Schichtdicken der SiO₂-Schichten und der darauf aufgebrachten Metalloxide, kann der

Farbverlauf bei unterschiedlichen Farben beginnen bzw. enden. Beispielsweise werden bei Verwendung von Eisenoxid als Metalloxid durch die absorbierenden Eigenschaften dieses Materials, bei Betrachtung aus unterschiedlichen Betrachtungswinkeln, Farbverläufe beobachtet, die durch zusätzliches Überlagern von Absorption und Interferenz sowie durch höheres Deckvermögen gekennzeichnet sind. Als weiterer Vorteil stellt sich dabei heraus, dass die Effektpigmente gemäß der vorliegenden Erfindung transparent bis semitransparent sind. Das lässt einen besonders breiten Spielraum für Mischungen dieser Pigmente mit anderen transparenten aber auch mit deckenden Pigmenten zur gezielten Einstellung einer bestimmten Koloristik eines Anwendungssystems mit Winkelabhängigkeit der Farbe zu. Die insgesamt geringe Dicke der Pigmentteilchen lässt sie für alle Anwendungen einschließlich anspruchsvoller Lacksysteme geeignet erscheinen.

Aufgrund der vorteilhaften Eigenschaften eignen sich die erfindungsgemäßen Effektpigmente universell für eine große Anzahl unterschiedlichster Anwendungen. Gegenstand der vorliegenden Erfindung ist demgemäss auch die Verwendung dieser Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

Die erfindungsgemäßen Pigmente basieren auf synthetischen SiO₂-Plättchen, die über eine einheitliche Schichtdicke verfügen und vorzugsweise gemäß der internationalen Anmeldung WO 93/08237 auf einem endlosen Band durch Verfestigung und Hydrolyse einer Wasserglaslösung hergestellt werden. Unter einheitlicher Schichtdicke wird dabei eine Schichtdickentoleranz von 3 bis 10%, bevorzugt von 3 bis 5 % der Gesamttrockenschichtdicke der Partikel verstanden. Die plättchenförmigen Siliziumdioxidpartikel liegen im allgemeinen in amorpher Form vor. Synthetische Plättchen dieser Art haben gegenüber natürlichen Materialien, wie z.B. Glimmer, den Vorteil, dass die Schichtdicke im Hinblick auf die gewünschten Effekte eingestellt werden kann und die Schichtdickentoleranz begrenzt ist. Dieser Vorteil ist wesentlich für den gewünschten Farbflop, da bereits geringfügig stärkere Abweichungen bei der Schichtdickenverteilung den Umfang der Farbflopverläufe einschränkt, so dass kein Farbflop über alle vier Quadranten des a,b-Farbkoordinatensystems beobachtet werden kann.

Der Durchmesser der SiO₂-Plättchen liegt üblicherweise zwischen 1 und 250 µm, vorzugsweise zwischen 2 und 100 µm. Ihre Dicke beträgt zwischen 520 und 560 nm und bevorzugt 530 bis 550 nm. Das mittlere Aspektverhältnis der plättchenförmigen SiO₂-Plättchen, das heißt das Verhältnis vom mittleren Längenmesswert, der hier dem mittleren Durchmesser entspricht, zum mittleren Dickenmesswert, beträgt üblicherweise 5 bis 200, bevorzugt 20 bis 150 und besonders bevorzugt 30 bis 120.

Die genannten SiO₂-Plättchen sind in den erfindungsgemäßen Pigmenten mit Metalloxidschichten beschichtet, wie z.B. Titandioxid, Eisenoxid, Zirkoniumoxid, Suboxiden, z.B. des Titans, und/oder Mischungen der genannten Materialien. Die vorliegende Aufzählung schließt den Einsatz weiterer Metalloxide nicht aus. Besonders bevorzugt ist das Metalloxid Eisenoxid und/oder Titandioxid. Das Eisenoxid liegt dabei vorzugsweise als Hämatit (α-Fe₂O₃) und das Titandioxid in der Rutilmodifikation vor. Die Dicke der Metalloxidschichten beträgt 15 bis 40 nm, vorzugsweise 20 bis 35 nm. Durch geeignete Auswahl der Metalloxide und der Schichtdicken kann der Start- bzw. Endpunkt der Farbverläufe bestimmt werden.

In einer weiteren Ausführungsform der vorliegenden Erfindung können die erfindungsgemäßen Effektpigmente weiterhin mit einer zusätzlichen stabilisierenden organischen Beschichtung als äußere Schicht versehen sein. Beispiele für derartige Beschichtungen finden sich z.B. in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805, deren Offenbarung hiermit unter Bezugnahme mit eingeschlossen ist. Effektpigmente enthaltend eine organische Beschichtung, z.B. aus Organosilanen oder Organotitanaten bzw. Organozirkonaten zeigen neben den bereits genannten optischen Eigenschaften zusätzlich eine erhöhte Stabilität gegenüber Witterungseinflüssen, wie z.B. Feuchtigkeit und Licht, was vor allem für Industrielacke und im Automobilbereich von besonderem Interesse ist. Die Stabilisierung kann durch anorganische Komponenten der zusätzlichen Beschichtung verbessert werden. Insgesamt sind die jeweiligen Anteile für die zusätzliche stabilisierende Beschichtung so auszuwählen, dass die optischen Eigenschaften der erfindungsgemäßen Effektpigmente nicht wesentlich beeinflusst werden.

Ebenfalls Gegenstand der vorliegenden Erfindung sind Verfahren zur Herstellung der Pigmente gemäß Anspruch 1, wobei SiO₂-Plättchen mit einheitlicher Schichtdicke mit Metalloxiden beschichtet werden.

Die Beschichtung mit Metalloxiden kann nasschemisch und/oder durch CVD- oder PVD-Verfahren erfolgen.

Vorzugsweise handelt es sich bei den erfindungsgemäßen Verfahren zur Herstellung der Effektpigmente um nasschemische Verfahren, bei denen die bekannten, zur Herstellung von Perlglanzpigmenten entwickelten nasschemischen Beschichtungstechnologien angewendet werden können, die beispielsweise in den folgenden Publikationen beschrieben sind: DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017.

Zur Beschichtung werden die SiO₂-Plättchen in Wasser suspendiert und mit Metalloxiden durch Zugabe und Fällung der entsprechenden anorganischen Metallverbindungen beschichtet, wobei durch gleichzeitige Zugabe von Säure oder Base der für die Fällung des jeweiligen Metalloxids notwendige pH-Wert eingestellt und konstant gehalten wird und anschließend die beschichteten die SiO₂-Plättchen aus der wässrigen Suspension abgetrennt, getrocknet und gegebenenfalls kalziniert wird.

Die Kalzinierungstemperatur kann dabei im Hinblick auf die jeweils vorhandene Beschichtung optimiert werden. Im Allgemeinen liegt die Kalzinierungstemperatur jedoch zwischen 250 und 1000°C, insbesondere zwischen 350 und 900°C.

Wenn die Schicht TiO₂ umfasst, wird zum Aufbringen dieser Schicht bevorzugt das in US 3,553,001 beschriebene Verfahren eingesetzt. Dabei wird zu einer auf etwa 50-100°C, insbesondere 70-80°C erhitzten Suspension der SiO₂-Plättchen langsam eine wässrige Lösung eines anorganischen Titansalzes zugegeben und der pH-Wert durch gleichzeitiges Zudosieren einer Base bei 0.5 bis 5, insbesondere etwa 1.5 bis 2.5, weitgehend konstant gehalten. Sobald die gewünschte Schichtdicke des TiO₂-Oxidhydrates erreicht ist, wird die Zugabe der Titansalzlösung und der Base gestoppt. Dieses Verfahren wird auch als Titrationsverfahren bezeichnet und weist die Besonderheit auf, dass kein Überschuss an Titansalz vorliegt, sondern pro Zeiteinheit immer nur eine solche Menge bereitgestellt wird, wie für eine gleichmäßige Beschichtung mit dem hydratisierten TiO₂ erforderlich ist und auch von der Oberfläche der zu beschichtenden SiO₂-Plättchen aufgenommen werden kann. In der Lösung sind daher keine hydratisierten Titandioxidteilchen vorhanden, die nicht auf der zu beschichtenden Oberfläche abgeschieden werden.

Prinzipiell sind für die Herstellung der erfindungsgemäßen Pigmente auch CVD- oder PVD-Verfahren zur Beschichtung geeignet. Dabei ist es erforderlich, dass die SiO₂-Plättchen während des Bedampfungsvorganges gleichmäßig in Bewegung gehalten wird, damit eine homogene Beschichtung aller Oberflächen gewährleistet ist.

Darüber hinaus kann in einem ebenfalls erfindungsgemäßen Verfahren zusätzlich als äußere Schicht eine organische Beschichtung aufgebracht werden. Beispiele für derartige Beschichtungsverfahren finden sich unter anderem in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805. Beispiele für organische Beschichtungen sowie die damit verbundenen Vorteile sind bereits vorab beim Aufbau der erfindungsgemäßen Pigmente beschrieben worden. Der Verfahrensschritt der Aufbringung der organischen Beschichtung kann direkt an die anderen Schritte des erfindungsgemäßen Verfahrens angeschlossen werden. Die hierbei aufgebrachten Stoffe umfassen lediglich einen Gewichtsanteil von 0.1 bis 5 Gew. %, vorzugsweise 0.5 bis 3 Gew. %, des gesamten Pigmentes.

Die erfindungsgemäßen Effektpigmente sind vielfältig einsetzbar. Demgemäss ist die Verwendung der erfindungsgemäßen Pigmente in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten ebenfalls Gegenstand der vorliegenden Erfindung.

Im Falle von Kosmetika eignen sich die erfindungsgemäßen Effektpigmente besonders für Produkte und Formulierungen der dekorativen Kosmetik, wie z.B. Nagellacke, farbgebende Puder, Lippenstifte oder Lidschatten, Seifen, Zahnpasten etc. Selbstverständlich können die erfindungsgemäßen Effektpigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z.B. Verdicker und rheologische Zusatzstoffe wie etwa Bentonite, Hektorite, Siliziumdioxid, Ca-Silikate, Gelatine, hochmolekulare Kohlenhydrate und/oder oberflächenaktive Hilfsmittel, etc. Die erfindungsgemäße Effektpigmente enthaltenden Formulierungen können dem lipophilen, hydrophilen oder hydrophoben Typ angehören. Bei heterogenen Formulierungen mit diskreten wässrigen und nicht-wässrigen Phasen können die erfindungsgemäßen Partikel in jeweils nur einer der beiden Phasen enthalten oder auch über beide Phasen verteilt sein.

Die pH-Werte der wässrigen Formulierungen können zwischen 1 und 14, bevorzugt zwischen 2 und 11 und besonders bevorzugt zwischen 5 und 8 liegen. Den Konzentrationen der erfindungsgemäßen Effektpigmente in der Formulierung sind keine Grenzen gesetzt. Sie können - je nach Anwendungsfall - zwischen 0.001 (rinse-off-Produkte, z.B. Duschgele) - 99% (z.B. Glanzeffekt-Artikel für besondere Anwendungen) liegen. Die erfindungsgemäßen Effektpigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E etc.), Selbstbräuner (z.B. DHA, Erythrolose u.a.) sowie weitere kosmetische Wirkstoffe wie z.B. Bisabolol, LPO, Ectoin, Emblica, Allantoin, Bioflavanoide und deren Derivate.

Bei Einsatz der Effektpigmente in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Außenanwendungen. Die Lacke und Farben können hierbei beispielsweise strahlungshärtend, physikalisch trocknend oder chemisch härtend sein. Für die Herstellung der Druckfarben oder Flüssiglacke ist eine Vielzahl von Bindern, z.B. auf der Basis von Acrylaten, Methacrylaten, Polyestern, Polyurethanen, Nitrocellulose, Ethylcellulose, Polyamid, Polyvinylbutyrat, Phenolharzen, Maleinharzen, Stärke oder Polyvinylalkohol, Aminharzen, Alkydharzen, Epoxidharzen, Polytetrafluorethylen, Polyvinylidenfluoriden, Polyvinylchlorid oder Mischungen hieraus geeignet, insbesondere wasserlösliche Typen. Bei den Lacken kann es sich um Pulverlacke oder wasser- oder lösemittelbasierte Lacke handeln, wobei die Auswahl der Lackbestandteile dem Allgemeinwissen des Fachmanns unterliegt. Gängige polymere Bindemittel für Pulverlacke sind beispielsweise Polyester, Epoxide, Polyurethane, Acrylate oder Mischungen hieraus.

Darüber hinaus können die erfindungsgemäßen Effektpigmente in Folien und Kunststoffen verwendet werden, so z.B. in Agrarfolien, infrarotreflektierenden Folien und Scheiben, Geschenkfolien, Kunststoffbehältnissen und Formkörpern für alle dem Fachmann bekannten Anwendungen. Als Kunststoffe eignen sich alle gängigen Kunststoffe für die Einarbeitung der erfindungsgemäßen Effektpigmente, z.B. Duromere oder thermoplastische Kunststoffe. Die Beschreibung der Anwendungsmöglichkeiten und der einsetzbaren Kunststoffe, Verarbeitungsverfahren und Additive finden sich z.B. in der RD 472005 oder in R. Glausch, M. Kieser, R. Maisch, G. Pfaff, J. Weitzel, Perlglanzpigmente, Curt R. Vincentz Verlag, 1996, 83 ff., deren Offenbarungsgehalt hier mit umfasst ist.

Darüber hinaus eignen sich die erfindungsgemäßen Effektpigmente auch für den Einsatz im Sicherheitsdruck und in sicherheitsrelevanten Merkmalen für z.B. fälschungssichere Karten und Ausweise, wie z.B. Eintrittskarten, Personalausweise, Geldscheine, Schecks und Scheckkarten sowie für andere fälschungssichere Dokumente. Durch den Farbverlauf über alle vier Quadranten des a,b-Farbkoordinatensystems sind die erfindungsgemäßen Pigmente eindeutig nachweisbar und unterscheidbar von anderen Farbfloppigmenten. Dies erschwert Nachahmern den Einsatz von Effektpigmenten zur Fälschung von Wertgegenständen, da ein direkter visueller Vergleich zeigt, ob es sich um einfache oder die erfindungsgemäßen Pigmente auf dem Wertgegenstand handelt. Im Bereich der Landwirtschaft können die Effektpigmente zur Einfärbung von Saatgut und anderen Ausgangsgütern verwendet werden, darüber hinaus im Lebensmittelbereich zur Pigmentierung von Lebensmitteln. Zur Pigmentierung von Überzügen in Arzneimitteln wie z.B. Tabletten oder Dragees sind die erfindungsgemäßen Effektpigmente ebenfalls einsetzbar.

Die erfindungsgemäßen Effektpigmente eignen sich in den oben genannten Anwendungsgebieten ebenso zur Verwendung in Abmischungen mit organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc. Die erfindungsgemäßen Effektpigmente können in jedem Verhältnis mit handelsüblichen Pigmenten und Füllern gemischt werden.

Als Füllstoffe sind z.B. natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z.B. plättchenförmig, sphärisch oder nadelförmig sein.

Die erfindungsgemäßen Effektpigmente sind weiterhin geeignet zur Herstellung von fließfähigen Pigmentpräparationen und Trockenpräparaten enthaltend ein oder mehrere erfindungsgemäße Partikel, Bindemittel und optional ein oder mehrere Additive. Unter Trockenpräparate sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0.2-80 mm auf. Die Trockenpräparate finden insbesondere Anwendung bei der Herstellung von Druckfarben und in kosmetischen Formulierungen.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu begrenzen.

### Beispiele

### Beispiel 1: Fe₂O₃/SiO₂-Pigment

100g SiO₂ Flakes (540 nm dick) werden in 2 I vollentsalztem Wasser auf 75°C erhitzt. Unter Rühren werden 172 ml FeCl₃-Lösung (entspricht 20% Fe₂O₃) zugegeben. Der pH-Wert der Reaktionsmischung wird durch Zugabe von Natronlauge (30%ig) konstant bei 3 gehalten. Nach Zugabe der FeCl₃-Lösung wird der pH-Wert mit Natronlauge (32%ig) auf pH 5 angehoben. Das Produkt wird abfiltriert und mit vollentsalztem Wasser nachgewaschen. Nach Trocknung bei 110°C, wird bei 800°C kalziniert.

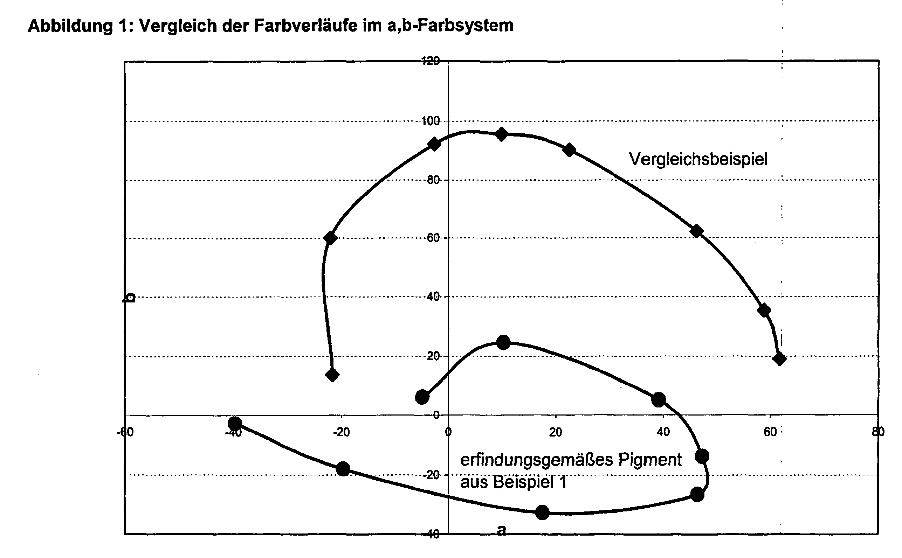

Das so hergestellte Pigment zeigt das in der Abbildung 1 (-●-) dargestellte Farbverhalten beim Abkippen einer Lackkarte von 90 Grad auf 180 Grad. Es werden dabei alle vier Quadranten im a,b-Farbsystem durchlaufen. Das erfindungsgemäße Pigment zeigt damit einen Rundumflop.

### Vergleichsbeisspiel: Fe₂O₃/SiO₂-Pigment gemäß WO 93/08237

100g Si02 Flakes (445 nm dick) werden in 1 I vollentsalztem Wasser auf 75°C erhitzt. Unter Rühren werden 237 ml FeCl₃-Lösung (entspricht 27.5% Fe₂O₃) zugegeben. Der pH-Wert der Reaktionsmischung wird durch Zugabe von Natronlauge (30%ig) konstant bei 3 gehalten. Nach Zugabe der FeCl₃-Lösung wird der pH-Wert mit Natronlauge (30%ig) auf pH 5 angehoben. Das Produkt wird abfiltriert und mit vollentsalztem Wasser nachgewaschen. Nach Trocknung bei 110°C, wird bei 800°C kalziniert.

Das so hergestellte Pigment zeigt das in der Abbildung 1 (-◆-) dargestellte Farbverhalten beim Abkippen einer Lackkarte von 90 Grad auf 180 Grad. Es werden dabei nur zwei Quadranten im a,b-Farbsystem durchlaufen.

## Patentansprüche

1. Effektpigmente mit Farbflop umfassend mit Metalloxiden beschichtete SiO₂-Plättchen mit einheitlicher Schichtdicke, **dadurch gekennzeichnet, dass** die Dicke der SiO₂-Plättchen 520 bis 560 nm beträgt, die Dicke der Metalloxidschichten 15 bis 40 nm beträgt und der Farbflop durch alle vier Quadranten des a,b-Farbkoordinatensystems (L,a,b-System nach CIELAB) verläuft.

2. Effektpigmente gemäß Anspruch 1, **dadurch gekennzeichnet, dass** die Schichtdickentoleranz der SiO₂-Plättchen mit einheitlicher Schichtdicke 3 bis 10% der Gesamttrockenschichtdicke der Partikel beträgt.

3. Effektpigmente gemäß Anspruch 1 oder 2, **dadurch gekennzeichnet, dass** die Dicke der SiO₂-Plättchen 530 bis 550 nm beträgt.

4. Effektpigmente gemäß einem der Ansprüche 1 bis 3, **dadurch gekennzeichnet, dass** der Durchmesser der SiO₂-Plättchen zwischen 1 und 250 µm liegt.

5. Effektpigmente gemäß einem der Ansprüche 1 bis 4, **dadurch gekennzeichnet, dass** das Metalloxid Eisenoxid und/oder Titandioxid ist.

6. Effektpigmente gemäß Anspruch 5, **dadurch gekennzeichnet, dass** das Eisenoxid als Hämatit (α-Fe₂O₃) und das Titandioxid in der Rutilmodifikation vorliegt.

7. Effektpigmente gemäß einem der Ansprüche 1 bis 6, **dadurch gekennzeichnet, dass** die Dicke der Metalloxidschichten 20 bis 35 nm beträgt.

8. Effektpigmente gemäß einem der Ansprüche 1 bis 7, **dadurch gekennzeichnet, dass** auf den Effektpigmenten zusätzlich eine organische Beschichtung aufgebracht ist.

9. Verfahren zur Herstellung von Effektpigmenten gemäß Anspruch 1, **dadurch gekennzeichnet, dass** SiO₂-Plättchen mit einheitlicher Schichtdicke mit Metalloxiden beschichtet werden.

10. Verfahren gemäß Anspruch 9, **dadurch gekennzeichnet, dass** die SiO₂-Plättchen eine Dicke von 530 bis 550 nm aufweisen.

11. Verfahren gemäß Anspruch 9 oder 10, **dadurch gekennzeichnet, dass** die Beschichtung mit den Metalloxiden derart erfolgt, dass die Dicke der Schichten zwischen 20 und 35 nm beträgt.

12. Verfahren gemäß einem der Ansprüche 8 bis 10, **dadurch gekennzeichnet, dass** die Beschichtung mit Metalloxiden nasschemisch und/oder durch CVD- oder PVD-Verfahren erfolgt.

13. Verfahren gemäß einem der Ansprüche 9 bis 12, **dadurch gekennzeichnet, dass** das Metalloxid Eisenoxid und/oder Titandioxid ist.

14. Verwendung von Effektpigmenten gemäß Anspruch 1 in Kosmetika, Lacken, Farben, Kunststoffen, Folien, im Sicherheitsdruck, in Sicherheitsmerkmalen in Dokumenten und Ausweisen, zur Saatguteinfärbung, zur Lebensmitteleinfärbung oder in Arzneimittelüberzügen sowie zur Herstellung von Pigmentpräparationen und Trockenpräparaten.

## Claims

1. Effect pigments having a colour flop comprising metal oxide-coated SiO₂ flakes having a uniform layer thickness, **characterised in that** the thickness of the SiO₂ flakes is 520 to 560 nm, the thickness of the metal-oxide layers is 15 to 40 nm and the colour flop passes through all four quadrants of the a,b colour coordinate system (CIELAB L,a,b system).

2. Effect pigments according to Claim 1, **characterised in that** the layer-thickness tolerance of the SiO₂ flakes having a uniform layer thickness is 3 to 10% of the total dry layer thickness of the particles.

3. Effect pigments according to Claim 1 or 2, **characterised in that** the thickness of the SiO₂ flakes is 530 to 550 nm.

4. Effect pigments according to one of Claims 1 to 3, **characterised in that** the diameter of the SiO₂ flakes is between 1 and 250 µm.

5. Effect pigments according to one of Claims 1 to 4, **characterised in that** the metal oxide is iron oxide and/or titanium dioxide.

6. Effect pigments according to Claim 5, **characterised in that** the iron oxide is in the form of haematite (α-Fe₂O₃) and the titanium dioxide is in the rutile modification.

7. Effect pigments according to one of Claims 1 to 6, **characterised in that** the thickness of the metal-oxide layers is 20 to 35 nm.

8. Effect pigments according to one of Claims 1 to 7, **characterised in that** an organic coating is additionally applied to the effect pigments.

9. Process for the preparation of effect pigments according to Claim 1, **characterised in that** SiO₂ flakes having a uniform layer thickness are coated with metal oxides.

10. Process according to Claim 9, **characterised in that** the SiO₂ flakes have a thickness of 530 to 550 nm.

11. Process according to Claim 9 or 10, **characterised in that** the coating with the metal oxides is carried out in such a way that the thickness of the layers is between 20 and 35 nm.

12. Process according to one of Claims 8 to 10, **characterised in that** the coating with metal oxides is carried out by wet-chemical methods and/or by CVD or PVD processes.

13. Process according to one of Claims 9 to 12, **characterised in that** the metal oxide is iron oxide and/or titanium dioxide.

14. Use of effect pigments according to Claim 1 in cosmetics, paints, coatings, plastics, films, in security printing, in security features in documents and identity papers, for colouring seed, for colouring foods or in medicament coatings and for the preparation of pigment compositions and dry preparations.

## Revendications

1. Pigments d'effet présentant un flop de couleur comprenant des flocons de SiO₂ revêtus d'un oxyde métallique présentant une épaisseur de couche uniforme, **caractérisés en ce que** l'épaisseur des flocons de SiO₂ est de 520 à 560 nm, l'épaisseur des couches en oxyde métallique est de 15 à 40 nm et le flop de couleur passe par l'ensemble des quatre quadrants du système de coordonnées de couleurs a,b (système CIELAB L,a,b).

2. Pigments d'effet selon la revendication 1, **caractérisés en ce que** la tolérance en terme d'épaisseur de couche des flocons de SiO₂ présentant une épaisseur de couche uniforme est de 3 à 10% de l'épaisseur de couche à sec totale des particules.

3. Pigments d'effet selon la revendication 1 ou 2, **caractérisés en ce que** l'épaisseur des flocons de SiO₂ est de 530 à 550 nm.

4. Pigments d'effet selon l'une des revendications 1 à 3, **caractérisés en ce que** le diamètre des flocons de SiO₂ est compris entre 1 et 250 µm.

5. Pigments d'effet selon l'une des revendications 1 à 4, **caractérisés en ce que** l'oxyde métallique est de l'oxyde de fer et/ou du dioxyde de titane.

6. Pigments d'effet selon la revendication 5, **caractérisés en ce que** l'oxyde de fer est selon la forme d'hématite (α-Fe₂O₃) et le dioxyde de titane est selon la modification rutile.

7. Pigments d'effet selon l'une des revendications 1 à 6, **caractérisés en ce que** l'épaisseur des couches en oxyde métallique est de 20 à 35 nm.

8. Pigments d'effet selon l'une des revendications 1 à 7, **caractérisés en ce qu'**un revêtement organique est additionnellement appliqué sur les pigments d'effet.

9. Procédé pour la préparation de pigments d'effet selon la revendication 1, **caractérisé en ce que** des flocons de SiO₂ présentant une épaisseur de couche uniforme sont revêtus d'oxydes métalliques.

10. Procédé selon la revendication 9, **caractérisé en ce que** les flocons de SiO₂ présentent une épaisseur de 530 à 550 nm.

11. Procédé selon la revendication 9 ou 10, **caractérisé en ce que** le revêtement avec les oxydes métalliques est mis en oeuvre de telle sorte que l'épaisseur des couches soit comprise entre 20 et 35 nm.

12. Procédé selon l'une des revendications 8 à 10, **caractérisé en ce que** le revêtement avec des oxydes métalliques est mis en oeuvre au moyen de procédés chimiques par voie humide et/ou au moyen de procédés CVD ou PVD.

13. Procédé selon l'une des revendications 9 à 12, **caractérisé en ce que** l'oxyde métallique est de l'oxyde de fer et/ou du dioxyde de titane.

14. Utilisation de pigments d'effet selon la revendication 1 dans des cosmétiques, des peintures, des revêtements, des matières plastiques, des films, dans une impression de sécurité, dans des caractéristiques de sécurité dans des documents et des papiers d'identité, pour colorer des semences, pour colorer des aliments ou dans des enrobages de médicament et pour la préparation de compositions de pigments et de préparations à sec.
